(19) Europäisches Patentamt
European Patent Office
Office européen des brevets

(11) EP 3 446 774 A1

(12) **EUROPEAN PATENT APPLICATION**

(43) Date of publication:
**27.02.2019 Bulletin 2019/09**

(21) Application number: **17187189.0**

(22) Date of filing: **22.08.2017**

(51) Int Cl.:
***B01D 67/00*** (2006.01) ***B01D 69/02*** (2006.01)
***B01D 69/14*** (2006.01) ***B01D 71/26*** (2006.01)
***B01D 71/28*** (2006.01) ***B01D 71/30*** (2006.01)
***B01D 71/34*** (2006.01) ***B01D 71/38*** (2006.01)
***B01D 71/42*** (2006.01) ***B01D 71/48*** (2006.01)
***B01D 71/50*** (2006.01) ***B01D 71/56*** (2006.01)
***C08J 3/22*** (2006.01) ***C08K 3/08*** (2006.01)
***D01F 1/10*** (2006.01) ***B01D 71/02*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **MIPTECH CO., LTD.**
**Miaoli County 35085 (TW)**
- **Hsieh, Kuo-Chih**
**Taipei City 10447 (TW)**

(72) Inventors:
- **Hsieh, Kuo-Chih**
**Cambridge CB1 1AH (GB)**
- **Tsai, Chien-Ying**
**Cambridge CB1 1AH (GB)**

(74) Representative: **Horak, Michael**
**horak. Rechtsanwälte Partnerschaft**
**Georgstrasse 48**
**30159 Hannover (DE)**

# (54) METHOD FOR MANUFACTURING FILTER MEMBRANE FOR INHIBITING MICROORGANISMS

(57) A method for manufacturing a filter membrane for inhibiting microorganisms includes the following steps: obtaining a nano-zinc precursor and dissolving it into water, adding at least one reducing agent and interfacial agent to the water, thereby reducing zinc ions of the nano-zinc precursor to zinc particles so as to form liquid having nano-zinc particles; respectively placing the liquid having nano-zinc particles and a polymer material into plastic masterbatch process equipment, respectively volatilizing the fluid having nano-zinc particles and polymer material through the plastic masterbatch process equipment, performing air extraction and mixing by the plastic masterbatch process equipment, and adding at least one grafting agent to perform a mixed graft link, allowing the nano-zinc particles and polymer material to be linked together stably so as to form a plastic masterbatch having nano-zinc particles; and making the plastic masterbatch into a filer membrane through film making equipment.

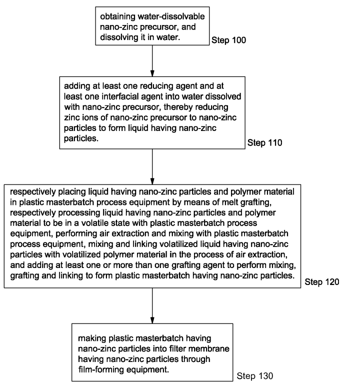


FIG.1



Printed by Jouve, 75001 PARIS (FR)

## Description

(a) Technical Field of the Invention

The present invention relates to a method for manufacturing a filter membrane for inhibiting microorganisms, and more particularly to a method for manufacturing a filter membrane for inhibiting microorganisms, including the following steps: reducing first to obtain nano-zinc particles: adding at least one reducing agent and at least one interfacial agent into water in which a nano-zinc precursor is dissolved, allowing zinc ions of the nano-zinc precursor to be reduced to zinc particles so as to obtain liquid having nano-zinc particles; forming further a plastic masterbatch having nano-zinc particles by means of air extraction and mixing: respectively processing the fluid having nano-zinc particles and polymer material to be in a volatile state through plastic masterbatch process equipment, performing the mixing in the process of air extraction, and adding at least one grafting agent to perform a mixed graft link, allowing the nano-zinc particles and polymer material to be linked together stably so as to form a plastic masterbatch having nano-zinc particles; and making the plastic masterbatch having nano-zinc particles into a filer membrane having nano-zinc particles through film making equipment, allowing a filter membrane with nano-zinc particles to be used to filter liquid or gas, and be anti-bacterial and capable of inhibiting the growth of bacteria.

(b) Description of the Prior Art

Zinc is strong antibiotic nutrition; it is a trace of nutrients. Zinc is an antioxidant ingredient of the human body, including four zinc atoms capable of protecting cell membrane and tissue from being damaged by hydroxyl free radicals such that it has a detoxification function and antibacterial effect. In addition, Zinc can change the metabolism of bacterial sources, making the revival chance of bacteria much less such that it can prevent the formation of many bacteria.

Therefore, Zinc has been proved that it can promote bacterial cell apoptosis such that some companies has developed combining zinc with articles so as to make the articles in combination with zinc antibacterial and bacteriostatic.

Taking zinc in combination with plastics as an example, conventional methods for combining zinc with plastics mainly are: adding first a plastic masterbatch into an organic solvent, allowing the plastic masterbatch to be dissolved in the organic solvent so as to form a plastic solution; adding zinc into the plastic solution to mix therewith; and placing the plastic solution with zinc into plastic granulation equipment to make plastic particles with zinc finally.

Thereafter, the plastic particles having zinc are used to make many kinds of articles (e.g. textile products, containers and the like), obtaining the articles made from plastic solution having zinc, thereby allowing them to have antibacterial and bacteriostatic effects.

However, in conventional methods for combining zinc elements with plastics, the plastic solution is a thick and dense liquid after the plastic masterbatch is dissolved such that zinc elements may not be mixed uniformly with the plastic solution. In addition, zinc elements in conventional methods are ionized, which further causes zinc elements not to be able to be linked stably with the plastic solution. As a result, articles made from conventional plastic solution having zinc elements (e.g. textile products) are very easy to lose zinc elements gradually after water wash, which causes the antibacterial or bacteriostatic capacity of the articles to be lowered or even lost. For example, a filter film having zinc can be reached more than standard 600ppm per particle in initial concentration, but it will be less than 600ppm per particle after scoured by water current for a long time.

Furthermore, Chinese Patent No. CN102205209B discloses "antibacterial polymer ultra-filtration membrane and preparation method thereof", having steps mainly: preparing a film-forming polymer solution; adding antibacterial agent particles having a long-term sustained release function formed by compounding an inorganic carrier (e.g. zeolite) and antibacterial agent (e.g. zinc ions) into the film-forming polymer solution, where the antimicrobial agent particles having a long-term sustained release function formed by compounding the inorganic carrier and antibacterial agent occupies 0.01 to 0.1 % by weight based on the weight of the polymers in the film-forming polymer solution, where the particle size of the antibacterial agent particle is 0.01-10$\mu$m; and preparing the antibacterial polymer ultra-filtration membrane through the non-solvent induced phase separation (NIPS) or thermally induced phase separation process (TIPS) by means of dry - wet spinning or wet spinning. The ultra-filtration membrane formed by the above method can be used for water filtration and purification, and has a long-term antibacterial effect; it can be widely used in drinking water treatment, home water purifier filter, and food and drug filtration and purification.

However, in the above patent, antibacterial agents such as sliver, copper and zinc will be dissolved and ionized, and lost substantially in a water bath stage of phase change in the process of mixing the inorganic antibacterial agent using powder such as zeolite as a carrier in the film-forming solution, resulting in an inability to accurately control the proper equivalent of the antimicrobial agent contained in the filter membrane; the inorganic bacterial agent using powder such as zeolite as a carrier, in the above patent, is added in a homogeneous casting solution, and the powder will then be precipitated in the process of standing defoaming, which affects the homogeneity of the casting solution, resulting in the lack of consistency in the equivalent of the antibacterial agent contained in the filter membrane. Meanwhile, it is

difficult to ensure the dispersibility of fine powders; the physical characteristics and filtration precision of the filter membrane will be changed, affecting the use efficiency thereof in the condition of powder agglomeration.

## SUMMARY OF THE INVENTION

To overcome the defects mentioned above, the present invention is proposed.

The present invention proposes a method for manufacturing a filter membrane for inhibiting microorganisms, including the following steps: obtaining a nano-zinc precursor and dissolving it into water, adding at least one reducing agent and at least one interfacial agent to the water in which the nano-zinc precursor is dissolved, thereby reducing zinc ions of the nano-zinc precursor to zinc particles so as to form liquid having nano-zinc particles; respectively placing the liquid having nano-zinc particles and a polymer material into plastic masterbatch process equipment, respectively processing the fluid having nano-zinc particles and the polymer material to be in a volatile state through the plastic masterbatch process equipment, performing air extraction and mixing by the plastic masterbatch process equipment, and adding at least one grafting agent to perform a mixed graft link, allowing the nano-zinc particles and polymer material to be linked together stably so as to form a plastic masterbatch having nano-zinc particles; and making the plastic masterbatch having nano-zinc particles into a filer membrane having nano-zinc particles through film making equipment.

The present invention is characterized in that the nano-zinc precursor is first reduced to nano-zinc particles, which uses a reducing agent to reduce nano-zinc ions to the nano-zinc particles, and an interfacial agent is then used to be in combination with nano-zinc particles by means of chemical grafting, allowing the reduced nano-zinc particles not to be in combination with other particles (i.e. preventing secondary agglomeration from being generated among the nano-zinc particles), thereby generating stable reduced nano-zinc particles; thereafter, a plastic masterbatch having nano-zinc particles is formed by means of air extraction and mixing, which uses plastic masterbatch process equipment to respectively process a liquid having nano-zinc particles and polymer material to be in a volatile state, and mix them in the process of air extraction, allowing the nano-zinc particles to be linked uniformly and stably with the polymer material so as to form a plastic masterbatch having nano-zinc particles; finally, the plastic masterbatch having nano-zinc particles is made into a filter membrane having nano-zinc particles through film making equipment.

Therefore, the filter membrane having nano-zinc particles made from the plastic masterbatch having nano-zinc particles can be used for the filtration of liquid or gas; zinc particle being antibacterial allows the filter membrane having nano-zinc particles to be capable of decomposition of bacteria and inhibition of bacterial growth. In addition, nano-zinc particles being stably linked with polymer material allows nano-zinc particles not to be easy to be lost gradually from the filter membrane having nano-zinc particles due to solution, phase change or water wash, capable of maintaining the antibacterial capacity of the filter membrane effectively for a long time.

## BRIEF DESCRIPTION OF THE DRAWINGS

FIG 1 is a flow chart of a method for making a filter membrane for inhibiting microorganisms of the present invention;
FIG 2 shows a chemical formula of a nano-zinc being grafted on polyvinyl pyrrolidone (PVP);
FIG 3 shows a chemical formula of a nano-zinc being grafted on sodium dodecyl sulfate (SDS);
FIG 4 shows a process of a zinc ion of a nano-zinc precursor being reduced to a nano-zinc particle;
FIG 5 shows a chemical formula of nano-zinc particle grafted on PVDF through maleic anhydride (grafting agent);
FIG 6 shows a chemical formula of nano-zinc particle grafted on PES through maleic anhydride (grafting agent);
FIG 7 shows a chemical formula of nano-zinc particle grafted on PAN through maleic anhydride (grafting agent);
FIG 8 shows a chemical formula of nano-zinc particle grafted on PVC through maleic anhydride (grafting agent);
FIG 9 is a first test report of the method for manufacturing a filter membrane for inhibiting microorganisms of the present invention;
FIG 10 is a second test report of the method for manufacturing a filter membrane for inhibiting microorganisms of the present invention;
FIG 11 is a third test report of the method for manufacturing a filter membrane for inhibiting microorganisms of the present invention; and
FIG 12 is a fourth test report of the method for manufacturing a filter membrane for inhibiting microorganisms of the present invention.

## DETAILED DESCRIPTION OF THE PREFERRED EMBODIMENTS

Referring to FIG. 1, a method for manufacturing a filter membrane for inhibiting microorganisms of the present invention includes the following steps:

step 100: obtaining a nano-zinc precursor capable of being dissolved in water, and dissolving the nano-zinc precursor into water, where the nano-zinc precursor may be zinc chloride, zinc gluconate, zinc acetate, zinc sulfate or zinc carbonate capable of being dissolved in water; for example, zinc dioxide being dissolved in water: $Zn^{2+}(s) + 2e^- \rightarrow Zn(aq)$

step 110: adding at least one reducing agent and at least one interfacial agent into the water in which the nano-zinc precursor is dissolved, thereby reducing the zinc ions of the nano-zinc precursor to nano-zinc particles so as to form a liquid having nano-zinc particles; namely, reducing nano-zinc ions to nano-particles with the reducing agent, and then using the interfacial agent to be in combination with the nano-zinc particles by means of chemical grafting, allowing the reduced nano-zinc particles not to be in combination with other particles (i.e. preventing secondary agglomeration from being generated among the nano-zinc particles), thereby forming the reduced stable nano-zinc particles, where the reducing agent may be one or more than one selected from a group constituted by hydrazinecompounds, dextrose, sodium ascorbate and ascorbic acid, sodium carboxymethyl celluiose (CMC), $SO_2$, $NaBH_4$, and the like.

The interfacial agent may be one or more than one selected from a group constituted by cetyl trimethylammonium bromide (CTAB), sodium dodecyl sulfate (SDS), polyvinylpyrrolidone (PVP), 3-(trimethoxysilyl)propyl methacrylate, sodium hydrogen methylsulfonate (MSMA), Dibenzoyl-L-tartaric acid (DBTA), 3-aminopropyltrimethoxy-silane (APTMS), (3-Mercaptopropyl)trimethoxysilane (MPTMS).

step 120: respectively placing the liquid having nano-zinc particles and a polymer material into plastic masterbatch process equipment by means of melt grafting, respectively processing the liquid having nano-zinc particles and polymer material to be in a volatile state through the plastic masterbatch process equipment, performing air extraction and mixing with the plastic masterbatch process equipment, allowing the volatilized liquid having nano-zinc particles and volatilized polymer material to be added with at least one grafting agent so as to carry out a mixed graft link in the process of air extraction, thereby forming a plastic masterbatch having nano-zinc particles, where the polymer material may be plastics such as PET, PA6(NYLON), PP, PE, ABS, PC, PVDF, PS, PES, PVC, PAN, and the like.

step 130: making the plastic masterbatch having nano-zinc particles into a filter membrane having nano-zinc particles through film making equipment.

In the step 110, the interfacial agent grafting the nano-zinc particles by means of chemical grafting in the process of nano-zinc particle being linked with the interfacial agent is a modification process, which allows the nano-zinc particles not to be liked with other particles. Furthermore, the nano-zinc particles are then formed into a composite material after the nano-zinc particles interact with the interfacial agent through chemical grafting process. For example, after PVP interacts with the nano-zinc particle after chemical grafting process, the chemical formula thereof is shown in FIG 2, and after SDS interacts with the nano-zinc particles through chemical grafting process, the chemical formula thereof is shown in FIG 3.

In the step 110, when CMC is selected for the interfacial agent, with CMC being dissolvable in water solution to cause it to be sticky and thick, allowing the nano-zinc particles to move more slowly in the sticky and thick water solution so that the chance of the collision and agglomeration thereof is reduced, thereby stabilizing them. In addition, the size distribution of the nano-zinc particles can be changed by changing temperature and/or adjusting the concentration of the reducing agent, achieving the purpose of handling particle size.

In a first preferred embodiment of the present invention, the zinc ions of the nano-zinc precursor being reduced to the nano-zinc particles in the step 110 is specifically described. The zinc ions of $Zn^{+2}$ concentration ranged from $1\times10^{-5}$mole to $1\times10^{-3}$mole are placed in a glass bottle, deionized water (DI) is added in the bottle, and the concentration of sodium dodecyl sulfatethe (SDS) is set to be ranged from 1mM to 10000mM, the concentration of cetyltrimethylammonium bromide (CTAB) from 1mM to 10000mM, the concentration of sodium carboxymethylcellulose (CMC) from 1 to 20 wt%. Thereafter, a solution in which a reducing agent $Na_2S_2O_5$ is ranged from 1 to 5 grams and a strong reducing agent $NaBH_4$ from 0.01 to 10M is added after stirred uniformly with a heating stirrer. In the process of stirring, the reducing agents are respectively added in. At this point, it should be noted that if the reducing agent has a high pH value, 0.1 to 40 $\mu$l of concentrated hydrochloric acid is needed to drop in; at this point, the pH value of the solution is adjusted to about 1 to 5, and the solution is stirred continuously and placed into a hot water bath of temperature ranged from 50 to 90 degrees centigrade, and heated and stirred with a magnet electric heating stirrer, thereby reducing nano-zinc ions to nano-zinc particles, the process of which is shown in FIG. 4.

In a second preferred embodiment of the present invention, the zinc ions of the nano-zinc precursor being reduced to the nano-zinc particles is further specifically described. A sonochemical method (i.e. the use of ultrasound to promote the reduction) is used; the nano-zinc precursor is placed in a reaction bottle, and the reaction bottle is then placed in a ultrasonic oven, using ultrasonic oscillation to generate reduced free radicals to reduce metal ions so as to generate nano-zinc particles. Furthermore, metal salt aqueous solution is then placed in the reaction bottle, and the interfacial agent is added therein to stabilize the nano-zinc particles. Thereafter, the reaction bottle is placed in a ultrasonic oscillator and oscillated thereby, and the reaction is completed after 8 to 15 minutes to obtain the nano-zinc particles;

the reaction mechanism thereof is $H_2O$ → -H+-OH(sonolysis)-OH(-H)+RH → -R (reducing species)+$H_2O(H_2)$RH → -R(reducing species)+ - H (sonolysis)-R (reducing species)+ Zn(M-1)+ + H++R+. The driving force of this reaction mechanism comes from air pockets generated from shock waves, or • OH or • H formed between air pockets and the solution, and the reduction of carbon chain molecules generates • R free radicals; or RH between interfaces is oscillated to form • R free radicals, which have redox reaction with metal ions to reduce the metal ions to metal nanoparticles of zero-valence.

In a third preferred embodiment of the present invention, the zinc ions of the nano-zinc precursor being reduced to the nano-zinc particles is further specifically described. An electrochemical method is used; this electrochemical method is published by Reetz, M. T. and Helbig, W. in year 1994, being used to generate metal nano-particles, the sizes of which can be adjusted by controlling the current of electrolytic apparatus. Therefore, the present invention can use the electrochemical method to reduce the zinc ions of the nano-zinc precursor to nano-zinc particles; the process thereof is shown as the following:

$$\text{Anode:} \quad Met_{bulk} \rightarrow Met^{n+} + n\,e^{-}$$

$$\text{Cathode:} \quad Met^{n+} + n\,e^{-} + stabilizer \rightarrow Met_{coll}/stabilizer$$

$$\text{Sum:} \quad Met_{bulk} + stabilizer \rightarrow Met_{coll}/stabilizer$$

In the step 120, the melt grafting is to place the liquid having nano-zinc particles and a polymer material respectively in a plastic masterbatch process equipment, which has twin screw extraction mechanism and at least six suction holes, where the twin screw extraction mechanism is in a vacuum state. The liquid having nano-zinc particles and the polymer material are respectively placed in the plastic masterbatch process equipment, where the liquid having nano-zinc particles and polymer material have a weight ratio ranged between 1:10 and 1:1. Whereby, the liquid having nano-zinc particles and polymer material are respectively processed to be in a volatile state with the plastic masterbatch process equipment, allowing the volatilized liquid having nano-zinc particles and volatilized polymer material to be mixed and linked together through the twin screw extraction and six suction holes in the process of air extraction. At this point, at least one grafting agent is added therein to perform the mixed graft link, thereby forming a plastic masterbatch having nano-zinc particles, where the addition amount of the grafting agent is between 0.1% and 5% by weight based on the weight percent of the polymer material weight.

The grafting agent may be maleic anhydride (MAA), which has a molecular formula $C_4H_2O_3$ and chemical formula

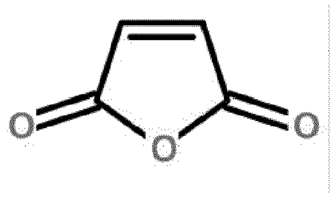

The grafting agent may also be glycidyl methacrylate (GMA), which has a molecular formula $C_7H_{10}O_3$ and chemical formula

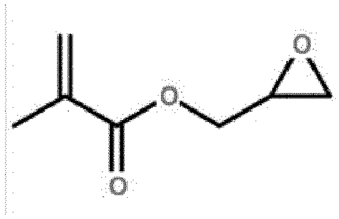

The grafting agent may also be acrylamide (AM), which has a molecular formula $CH_2=CHCONH_2$ and chemical formula

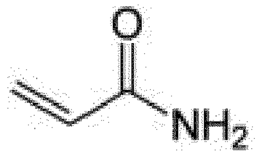

The grafting agent may also be acrylic acid (AAM), which has a molecular formula $C_3H_4O_2$ and chemical formula

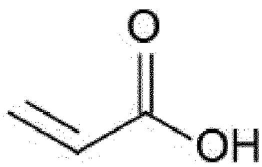

In a preferred embodiment, the chemical formulae for the nano-zinc particles of the present invention grafted on PVDF, PES, PAN, and PVC are explained, where FIG. 5 shows a formula for the nano-zinc particle of the present invention being grafted on PVDF through maleic anhydride (MAA); FIG. 6 shows a formula for the nano-zinc particle of the present invention added being grafted on PES through maleic anhydride (MAA); FIG. 7 shows a formula for the nano-zinc particle of the present invention being grafted on PAN through maleic anhydride (MAA); and FIG. 8 shows a formula for the nano-zinc particle of the present invention being grafted on PVC through maleic anhydride (MAA).

Therefore, the present invention is featured in that a nano-zinc precursor is first reduced to obtain nano-zinc particles, nano-zinc ions being reduced to nano-zinc particles with a reducing agent, an interfacial agent is used to be linked with the nano-zinc particles by means of chemical grafting, allowing the reduced nano-zinc particles not to be in combination with other particles any more, preventing secondary agglomeration from being generated among nano-zinc particles, thereby obtaining the stable reduced nano-zinc particles; thereafter, at least one grafting agent is then added to perform a mixed graft link to form a plastic masterbatch having nano-zinc particles by means of melt grafting, which is to use plastic masterbatch process equipment to respectively process the liquid having nano-zinc particles and a polymer material to be in a volatile state, and mix them in the process of air extraction, allowing the nano-zinc particles to be linked with the polymer material uniformly and stably to form a plastic masterbatch having nano-zinc particles; finally, the plastic masterbatch having nano-zinc particles is made into a filter membrane having nano-zinc particles through film making equipment. Here, the filter membrane having nano-zinc particles so made is a hollow fiber filter membrane, a plate filer membrane or other type of filter membrane.

It should be noted that using the melt grafting manner allows the nano-zinc particles to be linked with polymers without affecting the mechanical properties of polymers, and even allows plastics to have very good physical performance, for example, the improvement of ductility and toughness. Therefore, the present invention can prevent the defects generated from traditional manufacturing in which any type of organic or inorganic antibacterial agent is added in casting solution; the present invention has grafted nno-zinc particles on the polymer material before film-forming, allowing the polymer material to be formed into a homogeneous casting solution after dissolved in a film-forming solution such as DMF, DMAC or NMP, preventing effectively the serious issue of the uneven dispersion or agglomeration of the antibacterial agent. Furthermore, the casting solution is allowed to reduce effectively the dissolution amount of zinc particles in the process of water bath for phase change, ensuring the zinc equivalent of the filter membrane products, and obtaining a concentration that inhibits microorganisms. For example, the filter membrane of the nano-zinc particles prepared by the present invention can reach the standard of more than 600 ppm per unit particle.

Referring to FIG. 9, which shows a first test report, the test date is February 9,2015, and it can be known from the test result that a plastic masterbatch made from the zinc containing plastic solvent of the present invention has zinc content per unit up to 12,700ppm.

Referring to FIG. 10, which shows a second test report, the test date is April 27, 2015, and it can be known from the test result that a hollow silk film made of the plastic masterbatch having nano-zinc particles of the present invention has the zinc content up to 851ppm.

Referring to FIG. 11, which shows a third test report, the test date is September 30,2015, and it can be known from the test result that a PS hollow silk film made of the plastic masterbatch having nano-zinc particles of the present invention has zinc content up to 845ppm.

Therefore, it can be known from the above three test reports that the method for making a filter membrane still can have similar or close results even under the same construction method, the same formula, different time and different equipment condition, which proves that the plastic masterbatch having nano-zinc particles of the present invention is repeatable; it is undoubted that the present invention has this advantage.

Referring to FIG. 12, which shows a fourth test report, the test date is September 30, 2016; it can be known from the test result that the amount of zinc elements washed from the plastic masterbatch having nano-zinc particles is only 3ppm in the process of casting solution phase transition water bath; the instrument can not detect if the washed zinc element is less than 2ppm according to this test method. So, it can be concluded form the test data that zinc elements are not easy to be washed out from the plastic masterbatch having nano-zinc particles of the present invention, and most of them are remained in fiber film silk; the detected washed-out zinc amount 3ppm can be proved to be quite low.

The filter membrane having nano-zinc particles so made can be used for the filtration of liquid or gas; zinc particle being antibacterial allows the filter membrane having nano-zinc particles to be capable of decomposition of bacteria and inhibition of bacterial growth. In addition, nano-zinc particles being stably linked with polymer material allows nano-zinc particles not to be easy to be lost gradually from the filter membrane having nano-zinc particles after water wash, capable of maintaining the antibacterial capacity of the filter membrane effectively.

It is worth noting that the filter membrane having nan-zinc particles of the present invention being capable of inhibiting bacterial growth is using a constant 3.3eV power gap carried by nano-zinc oxide to force the extracellular molecules of microbial bacteria or ammonia molecules to break when the nano-zinc oxide is in contact with microbial bacteria or ammonia molecules to cause, for example, mechanisms such as the metabolism, nutrition in the outer membrane of bacteria to be lost, and thus to promote cell death, thereby achieving the decomposition of bacterial and inhibition of bacterial growth.

Furthermore, the power gap will cause water molecules $H_2O$ in the air to be free when the filter membrane having nano-zinc particles of the present invention is applied to the filtration of ammonia gas molecules; this kind of reaction needs $H_2O$ to participate to form (-OH) radicals, which will react with $NH_3$ to take H away from it to form $NH_2$- gradually, and finally, N is further in combination with other N to form a stable $N_2$ molecule, the decomposition formula of the entire $NH_3$ is shown as the following:

$$\underline{NH}_{(m-1)} + -OH \rightarrow \underline{NH_m}^{-} + H2O,$$

and finally, the free nitrogen atom will be in combination with a nitrogen atom: N + N $\rightarrow$ N2 to form nitrogen gas.

## Claims

1. A method for manufacturing a filter membrane for inhibiting microorganisms, comprising the following steps:

   (a) obtaining a nano-zinc precursor, and dissolving said nano-zinc precursor into water;
   (b) adding at least one reducing agent and at least one interfacial agent in said water dissolved with said nano-zinc precursor, thereby reducing zinc ions of said nano-zinc precursor to nano-zinc particles so as to form a liquid having nano-zinc particles;
   (c) respectively placing said liquid having nano-zinc particles and a polymer material into plastic masterbatch process equipment by means of melt grafting, respectively processing said liquid having nano-zinc particles and said polymer material to be in a volatile state with said plastic masterbatch process equipment, mixing and linking said volatilized liquid having nano-zinc particles with said volatilized polymer material in the process of air extraction, and adding at least one grafting agent to perform a mixed graft link so as to form a plastic masterbatch having nano-zinc particles; and
   (d) making said plastic masterbatch having nano-zinc particles into a filter membrane having nano-zinc particles through film making equipment.

2. The method according to claim 1, wherein said nano-zinc precursor is zinc chloride, zinc gluconate, zinc acetate, zinc sulfate or zinc carbonate.

3. The method according to claim 1, wherein said reducing agent is one or more than one selected from a group constituted by hydrazinecompounds, dextrose, sodium ascorbate and ascorbic acid, sodium carboxymethyl cellulose (CMC), $SO_2$ and $NaBH_4$.

4. The method according to claim 1, wherein said interfacial agent is one or more than one selected from a group constituted by cetyl trimethylammonium bromide (CTAB), sodium dodecyl sulfate (SDS), polyvinylpyrrolidone (PVP), 3-(trimethoxysilyl)propyl methacrylate, MSMA, sodium hydrogen. methylsulfonate, dibenzoyl-L-tartaric acid (DBTA), 3-aminopropyltrimethoxy-silane (APTMS), and (3-mercaptopropyl)trimethoxysilane (MPTMS).

5. The method according to claim 1, wherein said polymer material is PET, PA6, PP, PE, ABS, PC, PVDF, PS, PES, PVC or PAN.

6. The method according to claim 1, wherein in said step (c) of respectively placing said liquid having nano-zinc particles, said melt grafting is to place said liquid having nano-zinc particles and a polymer material respectively in a plastic masterbatch process equipment having twin screw extraction mechanism and at least six suction holes, said twin screw extraction mechanism being in a vacuum state; said liquid having nano-zinc particles and polymer material are respectively placed in said plastic masterbatch process equipment, said liquid having nano-zinc particles and polymer material having a weight ratio ranged between 1:10 and 1:1; said liquid having nano-zinc particles and polymer material are respectively processed to be in a volatile state with said plastic masterbatch process equipment, allowing said volatilized liquid having nano-zinc particles and volatilized polymer material to be mixed and linked together through said twin screw extraction and six suction holes in the process of air extraction; and at this point, at least one grafting agent is added therein to perform mixing, grafting and linking, thereby forming a plastic masterbatch having nano-zinc particles.

7. The method according to claim 1, wherein in said step (b) of adding at least one reducing agent, the manner of zinc ions of said nano-zinc precursor being reduced to said nano-zinc particles is to place zinc ions of $Zn^{+2}$ concentration ranged from $1\times10^{-5}$mole to $1\times10^{-3}$mole in a glass bottle, deionized water (DI) is added in said bottle, and the concentration of sodium dodecyl sulfatethe (SDS) is set to be ranged from 1mM to 10000mM, the concentration of cetyltrimethylammonium bromide (CTAB) from 1mM to 10000mM, the concentration of sodium carboxymethylcellulose (CMC) from 1 to 20 wt%; a solution in which a reducing agent $Na_2S_2O_5$ is ranged from 1 to 5 grams and a strong reducing agent $NaBH_4$ from 0.01 to 10M is added after stirred uniformly with a heating stirrer; in the process of stirring, said reducing agents are respectively added in; if said reducing agent has a high pH value, 0.1 to 40 $\mu$l of concentrated hydrochloric acid is needed to drop in; at this point, the pH value of said solution is adjusted to about 1 to 5, and said solution is stirred continuously and placed into a hot water bath of temperature ranged from 50 to 90 degrees centigrade, and heated and stirred with a magnet electric heating stirrer, thereby reducing nano-zinc ions to nano-zinc particles.

8. The method according to claim 1, wherein in said step (b) of adding at least one reducing agent, the manner of zinc ions of said nano-zinc precursor being reduced to the nano-zinc particles uses a sonochemical method; said nano-zinc precursor is placed in a reaction bottle, and said reaction bottle is then placed in a ultrasonic oven, using ultrasonic oscillation to generate reduced free radicals to reduce metal ions so as to generate nano-zinc particles; metal salt aqueous solution is then placed in said reaction bottle, and said interfacial agent is added therein to stabilize said nano-zinc particles; said reaction bottle is placed in a ultrasonic oscillator and oscillated thereby, and a reaction is completed after 8 to 15 minutes is completed to reduce nano-zinc ions to nano-zinc particle.

9. The method according to claim 1, wherein in said step (b) of adding at least one reducing agent, said manner of zinc ions of said nano-zinc precursor being reduced to said nano-zinc particles uses an electrochemical method; said electrochemical method is published by Reetz, M. T. and Helbig, W. in year 1994, being used to generate metal nano-particles, the sizes of said nano-particles can be adjusted by controlling the current of electrolytic apparatus; thereby reducing said zinc ions of said nano-zinc precursor to said nano-zinc particles with said electrochemical method.

10. The method according to claim 1, wherein said grafting agent is maleic anhydride, acetic anhydride, glycidyl methacrylate, acrylamide or acrylic acid.

11. The method according to claim 1, wherein said filter membrane having nano-zinc particles is a hollow fiber filter membrane, plate filer membrane or other type of filter membrane.

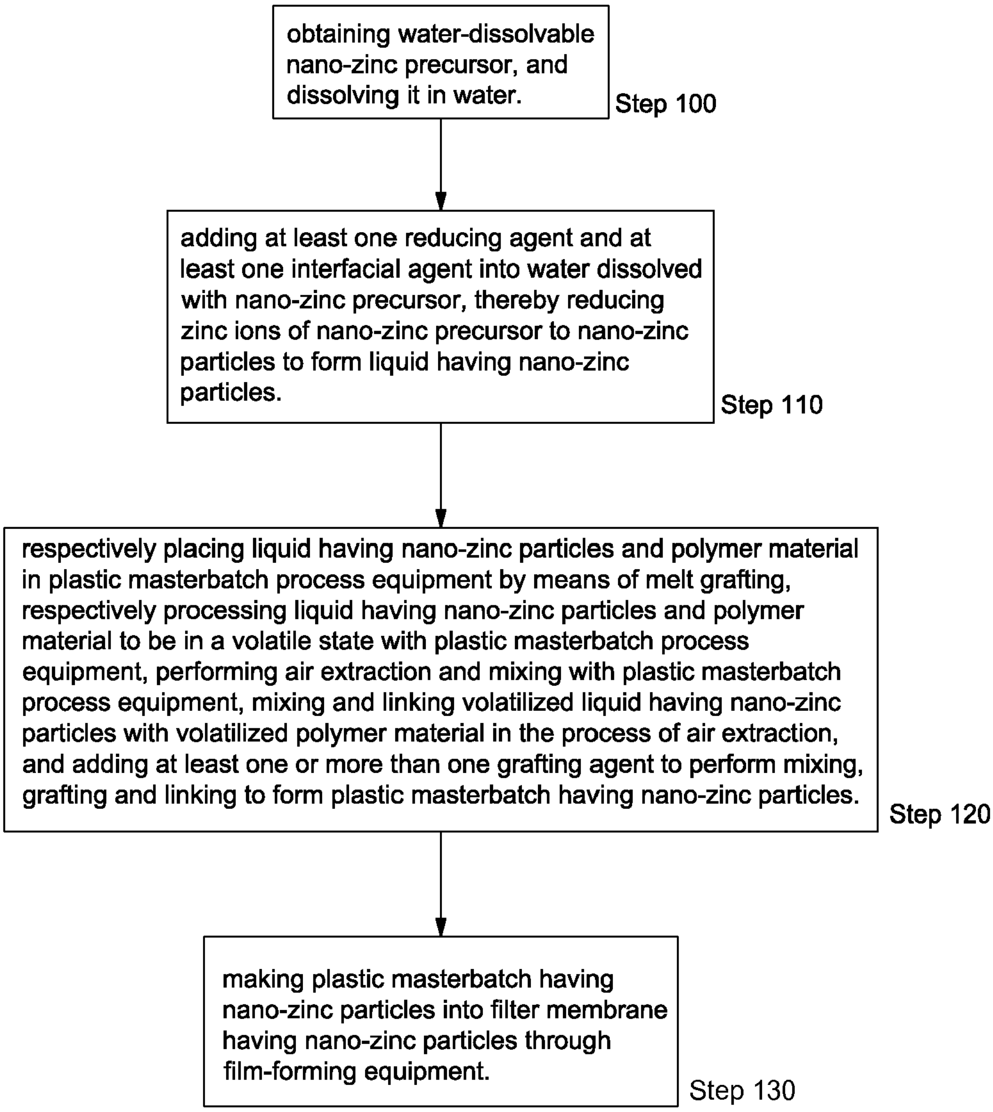
obtaining water-dissolvable nano-zinc precursor, and dissolving it in water.
Step 100
adding at least one reducing agent and at least one interfacial agent into water dissolved with nano-zinc precursor, thereby reducing zinc ions of nano-zinc precursor to nano-zinc particles to form liquid having nano-zinc particles.
Step 110
respectively placing liquid having nano-zinc particles and polymer material in plastic masterbatch process equipment by means of melt grafting, respectively processing liquid having nano-zinc particles and polymer material to be in a volatile state with plastic masterbatch process equipment, performing air extraction and mixing with plastic masterbatch process equipment, mixing and linking volatilized liquid having nano-zinc particles with volatilized polymer material in the process of air extraction, and adding at least one or more than one grafting agent to perform mixing, grafting and linking to form plastic masterbatch having nano-zinc particles.
Step 120
making plastic masterbatch having nano-zinc particles into filter membrane having nano-zinc particles through film-forming equipment.
Step 130

FIG.1

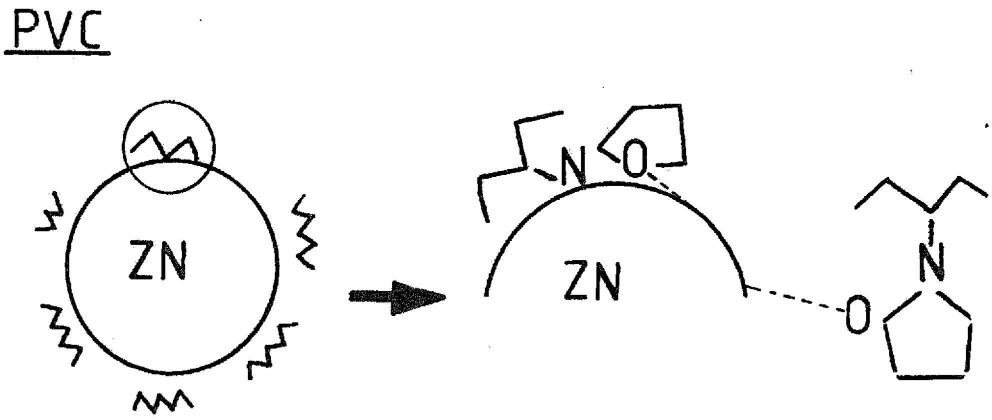


FIG.2

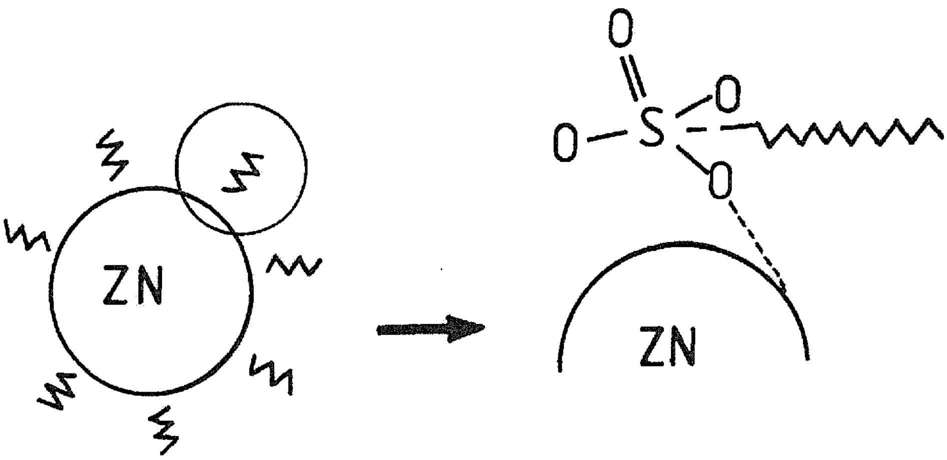

FIG.3

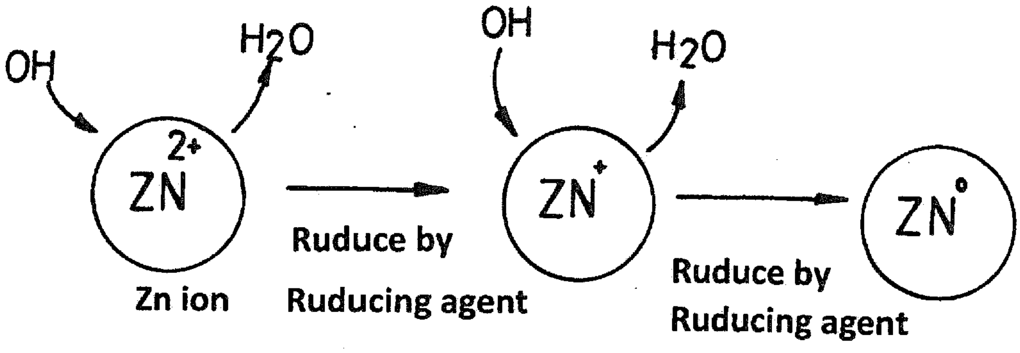


FIG.4

ZnO grafted on PVDA(using MA)

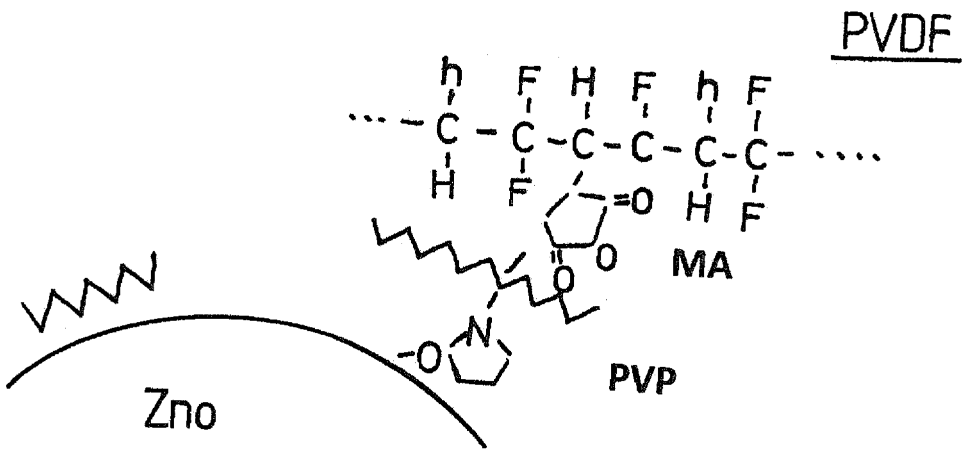

FIG.5

ZnO grafted on PES(using MA)

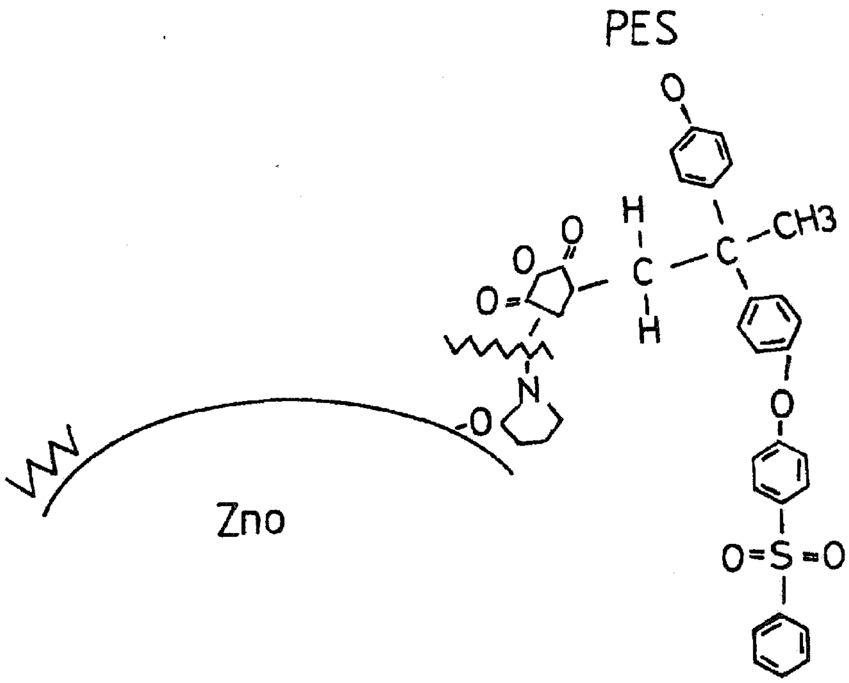

FIG.6

ZnO grafted on PAN(using MA)

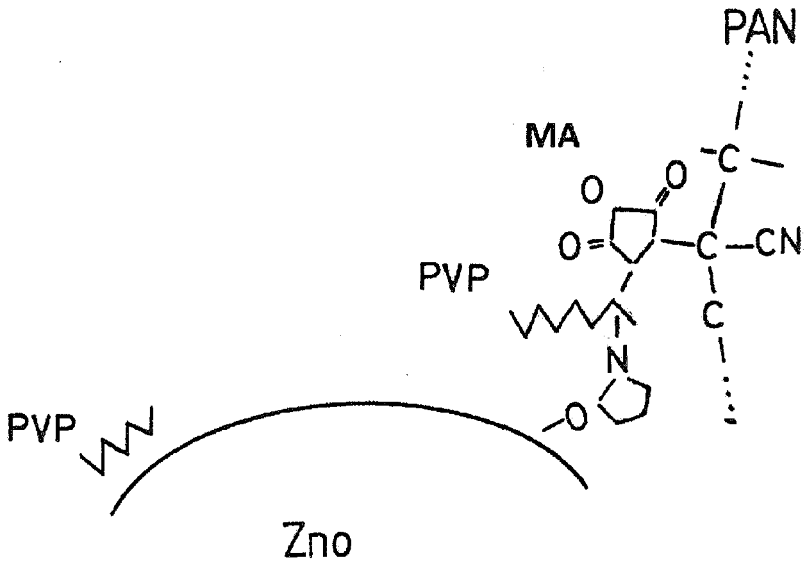

FIG.7

ZnO grafted on PVC(using MA)

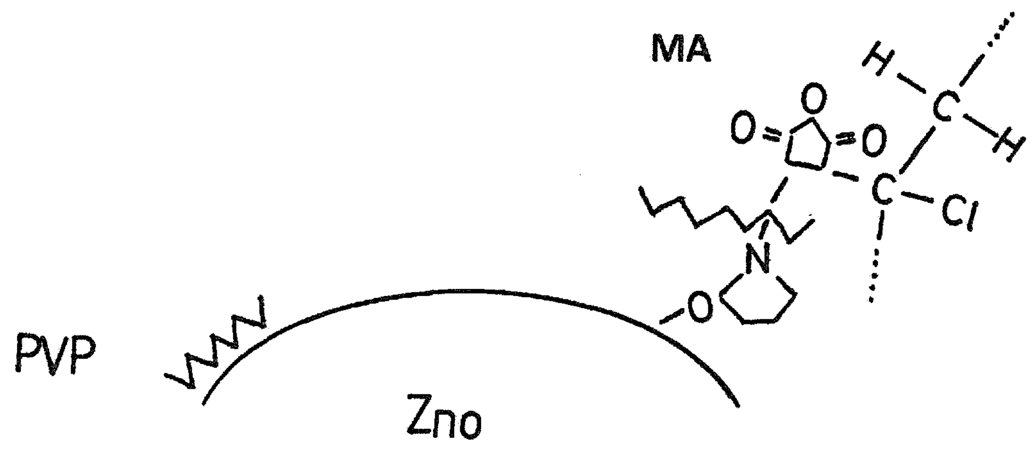

FIG.8

SGS

# Test Report

No. : CM/2015/10278 Date : 2015/02/09 Page : 2 of 3

UNITIVA APPLIED MATERIALS CORP.
8F., NO. 67, CHANGCHUN RD., ZHONGSHAN DIST., TAIPEI CITY 10447, TAIWAN

**Test Result(s)**

PART NAME No.1 : BLACK PLASTIC PELLETS

| Test Item(s) | Unit | Method | MDL | Result No.1 |
|---|---|---|---|---|
| Zinc (Zn) | % | ICP-AES after as per acid digestion. | 0.0002 | 1.27 |

**Note :**

1. mg/kg = ppm ; 0.1wt% = 1000ppm
2. n.d. = Not Detected
3. MDL = Method Detection Limit

This document is issued by the Company subject to its General Conditions of Service printed overleaf, available on request or accessible at [illegible] and, for electronic format documents, subject to Terms and Conditions for Electronic Documents at [illegible]. Attention is drawn to the limitation of liability, indemnification and jurisdiction issues defined therein. Any holder of this document is advised that information contained hereon reflects the Company's findings at the time of its intervention only and within the limits of client's instruction, if any. The Company's sole responsibility is to its Client and this document does not exonerate parties to a transaction from exercising all their rights and obligations under the transaction documents. This document cannot be reproduced, except in full, without prior written approval of the Company. Any unauthorized alteration, forgery or falsification of the content or appearance of this document is unlawful and offenders may be prosecuted to the fullest extent of the law. Unless otherwise stated the results shown in this test report refer only to the sample(s) tested.

33, Wu Chuan Rd., New Taipei Industrial Park, New Taipei City, Taiwan /
t+886 (02)2299 3279 f+886 (02)2299 3237 www.sgs.tw

Member of the SGS Group

FIG.9

SGS

# Test Report

No. : CM/2015/40195 Date : 2015/04/27 Page : 2 of 3

UNITIVA APPLIED MATERIALS CORP.
8F., NO. 67, CHANGCHUN RD., ZHONGSHAN DIST., TAIPEI CITY 10447, TAIWAN

**Test Result(s)**

PART NAME No.1 : WHITE FIBER

| Test Item(s) | Unit | Method | MDL | Result |
|---|---|---|---|---|
| | | | | No.1 |
| Zinc (Zn) | mg/kg | ICP-AES after as per acid digestion. | 2 | 851 |

**Note :**

1. mg/kg = ppm ; 0.1wt% = 1000ppm
2. n.d. = Not Detected
3. MDL = Method Detection Limit

This document is issued by the Company subject to its General Conditions of Service printed overleaf, available on request or accessible at and, for electronic format documents, subject to Terms and Conditions for Electronic Documents at . Attention is drawn to the limitation of liability, indemnification and jurisdiction issues defined therein. Any holder of this document is advised that information contained hereon reflects the Company's findings at the time of its intervention only and within the limits of client's instruction, if any. The Company's sole responsibility is to its Client and this document does not exonerate parties to a transaction from exercising all their rights and obligations under the transaction documents. This document cannot be reproduced, except in full, without prior written approval of the Company. Any unauthorized alteration, forgery or falsification of the content or appearance of this document is unlawful and offenders may be prosecuted to the fullest extent of the law. Unless otherwise stated the results shown in this test report refer only to the sample(s) tested.

SGS Taiwan Ltd. 台灣檢驗科技股份有限公司 | 33, Wu Chuan Rd., New Taipei Industrial Park, New Taipei City, Taiwan / 新北市新北產業園區五權路33號
t+886 (02)2299 3279 f+886 (02)2299 3237 www.sgs.tw

Member of the SGS Group

FIG.10

SGS

# 測試報告
# Test Report

號碼(No.) : CM/2016/90238　日期(Date) : 2016/09/30　頁數(Page) : 2 of 3

永純應用材料股份有限公司
EVER PURE APPLIED MATERIALS CO., LTD.
苗栗縣竹南鎮頂埔里11鄰109-1號
NO. 109-1, DINGPU LI, CHUNAN TOWN, MIAO-LI COUNTY 35051, TAIWAN(R.O.C.)

**測試結果(Test Results)**

測試部位(PART NAME)No. 1　:　白色膜 (WHITE FILM)

| 測試項目 (Test Items) | 單位 (Unit) | 測試方法 (Method) | 方法偵測極限值 (MDL) | 結果 (Result) No. 1 |
|---|---|---|---|---|
| 鋅 / Zinc (Zn) | mg/kg | 酸消化後以感應耦合電漿原子發射光譜儀分析 / ICP-AES after as per acid digestion. | 2 | 845 |

備註(Note):

1. mg/kg = ppm ; 0.1wt% = 1000ppm
2. n.d. = Not Detected (未檢出)
3. MDL = Method Detection Limit (方法偵測極限值)

This document is issued by the Company subject to its General Conditions of Service printed overleaf, available on request or accessible at [illegible] and, for electronic format documents, subject to Terms and Conditions for Electronic Documents at [illegible]. Attention is drawn to the limitation of liability, indemnification and jurisdiction issues defined therein. Any holder of this document is advised that information contained hereon reflects the Company's findings at the time of its intervention only and within the limits of client's instruction, if any. The Company's sole responsibility is to its Client and this document does not exonerate parties to a transaction from exercising all their rights and obligations under the transaction documents. This document cannot be reproduced, except in full, without prior written approval of the Company. Any unauthorized alteration, forgery or falsification of the content or appearance of this document is unlawful and offenders may be prosecuted to the fullest extent of the law. Unless otherwise stated the results shown in this test report refer only to the sample(s) tested.

SGS Taiwan Ltd. | 25, Wu Chyuan 7th Road, New Taipei Industrial Park, Wu Ku District, New Taipei City, Taiwan
t+886 (02)2299 3939 f+886 (02)2299 3237 www.sgs.tw

Member of the SGS Group

FIG.11

SGS

# 測試報告
# Test Report

號碼(No.)：CM/2016/90240 日期(Date)：2016/09/30 頁數(Page)：2 of 3

永純應用材料股份有限公司
EVER PURE APPLIED MATERIALS CO., LTD.
苗栗縣竹南鎮頂埔里11鄰109-1號
NO. 109-1, DINGPU LI, CHUNAN TOWN, MIAO-LI COUNTY 35051, TAIWAN(R.O.C.)

测試結果(Test Results)

測試部位(PART NAME)No.1 ： 白色液體 (WHITE LIQUID)

| 測試項目 (Test Items) | 單位 (Unit) | 測試方法 (Method) | 方法偵測極限值 (MDL) | 結果 (Result) |
|---|---|---|---|---|
| | | | | No.1 |
| 鋅 / Zinc (Zn) | mg/kg | 酸消化後以感應耦合電漿原子發射光譜儀分析 / ICP-AES after as per acid digestion. | 2 | 3 |

備註(Note)：

1. mg/kg = ppm；0.1wt% = 1000ppm
2. n.d. = Not Detected (未檢出)
3. MDL = Method Detection Limit (方法偵測極限值)

This document is issued by the Company subject to its General Conditions of Service printed overleaf, available on request or accessible at [illegible] and, for electronic format documents, subject to Terms and Conditions for Electronic Documents at [illegible]. Attention is drawn to the limitation of liability, indemnification and jurisdiction issues defined therein. Any holder of this document is advised that information contained hereon reflects the Company's findings at the time of its intervention only and within the limits of client's instruction, if any. The Company's sole responsibility is to its Client and this document does not exonerate parties to a transaction from exercising all their rights and obligations under the transaction documents. This document cannot be reproduced, except in full, without prior written approval of the Company. Any unauthorized alteration, forgery or falsification of the content or appearance of this document is unlawful and offenders may be prosecuted to the fullest extent of the law. Unless otherwise stated the results shown in this test report refer only to the sample(s) tested.

SGS Taiwan Ltd. | 25, Wu Chyuan 7th Road, New Taipei Industrial Park, Wu Ku District, New Taipei City, Taiwan
t+886 (02)2299 3939 f+886 (02)2299 3237 www.sgs.tw

Member of the SGS Group

FIG.12

Europäisches Patentamt
European Patent Office
Office européen des brevets

# EUROPEAN SEARCH REPORT

Application Number
EP 17 18 7189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 160 945 A1 (POLYMERS CRC LTD [AU]) 10 March 2010 (2010-03-10) * paragraphs [0016], [0020], [0022], [0024] - [0027], [0042], [0044], [0046] - [0047], [0061]; claim 13, * | 1-11 | INV. B01D67/00 B01D69/02 B01D69/14 B01D71/26 B01D71/28 B01D71/30 B01D71/34 B01D71/38 B01D71/42 B01D71/48 B01D71/50 B01D71/56 C08J3/22 C08K3/08 D01F1/10 B01D71/02 |
| Y | CN 105 694 438 A (HUIZHOU HUANMEISHENG NEW MAT CO LTD; HUIZHOU HONGSHENG PLASTIC PRODUCT) 22 June 2016 (2016-06-22) * abstract * * claims 1,3 * | 1-11 | |
| Y | US 2011/233810 A1 (NEIGEL DENNIS V [US] ET AL) 29 September 2011 (2011-09-29) * paragraph [0022]; claims 1,27 * | 1-11 | |
| Y | US 2008/087137 A1 (SHIM IN-KEUN [KR] ET AL) 17 April 2008 (2008-04-17) * claims 3,8 * | 2,4,7-9 | |
| Y | US 2014/033870 A1 (TSAY MING-TSEH [TW] ET AL) 6 February 2014 (2014-02-06) * claim 7 * | 4,7-9 | TECHNICAL FIELDS SEARCHED (IPC): B01D C08J C08K D01F |

The present search report has been drawn up for all claims

1

| Place of search | Date of completion of the search | Examiner |
|---|---|---|
| Munich | 13 February 2018 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 18 7189

This annex lists the patent family members relating to the patent documents cited in the above-mentioned European search report. The members are as contained in the European Patent Office EDP file on
The European Patent Office is in no way liable for these particulars which are merely given for the purpose of information.

13-02-2018

| Patent document cited in search report | Publication date | Patent family member(s) | Publication date |
|---|---|---|---|
| EP 2160945 A1 | 10-03-2010 | NONE | |
| CN 105694438 A | 22-06-2016 | NONE | |
| US 2011233810 A1 | 29-09-2011 | BR 112012024273 A2 | 24-05-2016 |
| | | CN 102892824 A | 23-01-2013 |
| | | US 2011233810 A1 | 29-09-2011 |
| | | WO 2011119237 A2 | 29-09-2011 |
| US 2008087137 A1 | 17-04-2008 | CN 101100002 A | 09-01-2008 |
| | | JP 2008013846 A | 24-01-2008 |
| | | KR 20080004831 A | 10-01-2008 |
| | | US 2008087137 A1 | 17-04-2008 |
| US 2014033870 A1 | 06-02-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102205209 B